# EUROPEAN PATENT SPECIFICATION

(11) **EP 4 335 534 B1**
(45) Date of publication and mention of the grant of the patent: **06.11.2024**
(21) Application number: 22020438.2
(22) Date of filing: 13.09.2022
(51) Int. Cl.: B01D 53/00, B01D 53/04, B01D 53/047, B01D 53/26, F25J 3/04

(54) **AIR SEPARATION METHOD AND PLANT**
LUFTTRENNUNGSVERFAHREN UND -ANLAGE
PROCÉDÉ ET INSTALLATION DE SÉPARATION D'AIR

(30) Priority: 09.09.2022 EP 22020433
(43) Date of publication of application: 13.03.2024
(73) Proprietor: Linde GmbH, 82049 Pullach (DE)
(72) Inventor: Kirchner, Lars, 82049 Pullach (DE)
(74) Representative: Imhof, Dietmar

(56) References cited:
- US-A1- 2017 276 428
- US-A1- 2021 138 387
- US-A1- 2021 278 132
- US-B2- 7 645 319

## Description

In a classical adsorption purifier of a cryogenic air separation unit, air pressure and air flow vary in connection with switching steps in the purifier. In this invention we have a particular type of air supply to the air separation, i.e. a combination of an air grid that supplies other consumers as well and a dedicated main air compressor. Such configuration is, e.g., used, if an existing site, possibly already comprising one or more air separation units already supplied by the grid, is extended by a (further) air separation unit.

The existing capacity of the air grid may be used but may not be sufficient. The standard solution would be using a dedicated main air compressor for the complete air demand of the new air separation unit. In the process of the invention, the existing capacity of the grid is used and just the missing capacity is provided separately by a smaller main air compressor. The two air streams from the two sources are mixed at a mixing point. The question arises, how to control the total air flow in an efficient and stable manner. Similar processes have been disclosed in US 7 645 319 B2, US 2021/278132 A1, US 2017/276428 A1 or US 2021/138387 A1.

The solution to that problem is presented in the independent patent claims. Main feature is to control the main air compressor and not or not only the air from the air grid. The control strategies of the invention ensure the possibility to run the air separation unit with maximum capacity, without taking too much air from grid or loosing air feed during pressurization of the adsorber vessels of the purifier.

In a further embodiment of the invention, the setting of the air flow at the outlet of the main air compressor is performed by controlling the guide vanes of the main air compressor.

Preferably, the air flow from the air grid to the mixing point is set by a flow control valve, which is not controlled by the measuring of at least one parameter of the air flow upstream or downstream the purifier. The flow control valve for the flow from the air grid may even have a fixed position, meaning that a fixed amount of compressed air is fed from the air grid to the mixing point.

In another preferred embodiment, the air flow downstream the purifier is the single parameter measured and used for controlling the air flow. Such method results in a simple and stable control.

In one or more preferred embodiments, the following parameters are measured and used for controlling the air flow:
- air flow downstream the purifier,
- air flow upstream the purifier,
- air pressure downstream the purifier,
- air pressure upstream the purifier.

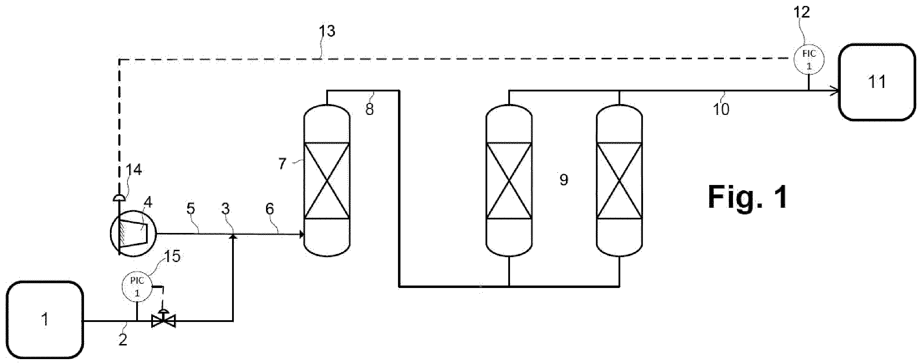

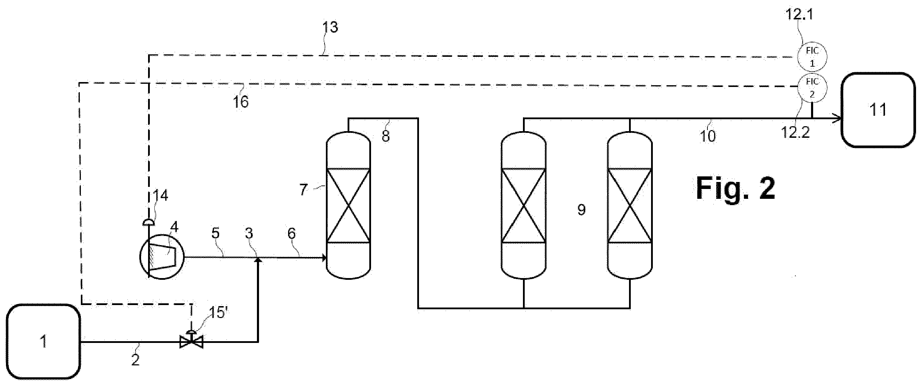

The invention and further details of the invention are now explained on the basis of the attached drawings. Figures 1 and 2 show two embodiments of the invention.

In Figure 1, a first source for pressurized air is a pressurized air grid 1. Via line 2, air from the air grid 1 is transported to a mixing point 3. The second air source for supplying pressurized air to the mixing point 3 is a main air compressor 4 being e.g. a turbocompressor. Pressurized air from the main air compressor 4 is guided by line 5 to the mixing point 3. The mixed air 6 is cooled in a classical direct contact cooler 7 by direct contact with cooling water (the water cycle not being shown in the drawing). Alternatively, the cooling of the air by cooling water may be performed by indirect heat exchange, e.g. in a TEMA heat exchanger (tube and shell).

The pre-cooled air 8 is sent to one of the adsorption vessels of a purifier 9, the other vessel being regenerated. The purifier is operated by TSA (temperature swing adsorption), PSA (pressure swing adsorption) or a combination of both. Purified air 10 is then sent to a cryogenic section comprising the main heat exchanger, the column(s) and turbines of the classical cold part of an air separation plant.

According to the invention, the flow of air 10 to the cryogenic section 11 is measured by a single flow measurement device 12 (FIC1 - flow indicator and controller). The measurement is used to set the air flow at the outlet of the main air compressor 4 by sending a control signal via data connection 13 to a setting device 14 of the main air compressor 4. It may thereby control the guide vane angel, the speed or another parameter of the main air compressor influencing the air flow at its outlet.

The air flow 2 in the meaning of the amount of air going the mixing point 3 from the grid may be kept constant or, alternatively vary with the above flow measurement or a different control parameter.

The embodiment is particularly suited for upgrading an air separation site having at least two air separation units being exclusively supplied with pressurized air by the air grid. There may be capacity in the grid that is intended to be used for the further, upgrading air separation plant, but such capacity being not sufficient. The solution according to the invention will be a relatively small main air compressor for the further plant in combination with the grid as shown in the embodiments here. The control method according to the invention results in a stable and economic operation.

Instead of the pressure control device 15 (PID), there could be used an HIC (hand indicating controller) in line 2 setting the flow from the grid to the mixing point just manually.

Figure 2 uses two FICs 12.1, 12.2; the two FICs may have slightly different set points. The measurement of the air flow in line 10 is the same for FIC1 and FIC2. The effect of FIC1 on the guide vanes 14 of the main air compressor is the same as in Figure 1. If two controllers FIC1,FIC2 are used, the setpoint for these will be slightly different. Consequently, the controller with the higher setpoint will be linked to the preferred air source (e.g. valve 15 for grid feed). When this source cannot deliver any more, the second air source (e.g. compressor capacity control 14) linked to the controller with the lower setpoint will cut in and compensate for the missing flow. The grid pressure limitation control can be combined with this control scheme. Alternatively, a "split range controller" may be used. Such split range controller acts e.g. from 0% to 50% output on one device only and above 50% output also starts opening the other device.

Alternatives to Figures 1 and 2 are pressure control upstream or downstream of the pre-purifier, split range and bias control.

## Claims

1. An air separation method, wherein compressed air (6) is successively cooled in a cooling step (7), purified in a purifier (9) and sent to a cryogenic section (11) producing at least one product containing at least one air component, the purifier (9) comprising at least two switchable adsorber vessels, one of them being in adsorption mode, whereby two sources of compressed air are provided, the first source being an air grid (1) supplying compressed air to further consumers, the second source being a dedicated main air compressor (4) delivering compressed air to the cooling step (7) only, air portions (2, 5) from both sources being mixed at a mixing point (3) and the air flow (10) to the cryogenic section (11) being controlled by measuring (12, 12.1, 12.2) at least one parameter of the air flow upstream or downstream the purifier and, according to such measurement, setting (14) the air flow (5) at the outlet of the main air compressor (4).

2. The method of claim 1, in which the setting (14) of the air flow at the outlet of the main air compressor is performed by controlling the guide vanes of the main air compressor.

3. The method of claim 1, in which the air flow (2) from the air grid (1) to the mixing point (3) is set by a flow control valve (15, 15'), which is not controlled by the measuring (12, 12.1, 12.2) of at least one parameter of the air flow upstream or downstream the purifier.

4. The method of any of the preceding claims, in which the air flow downstream the purifier is the single parameter measured and used for controlling the air flow.

5. The method of any of claims 1 to 3, in which one or more of the following parameters are measured and used for controlling the air flow:
- air flow downstream the purifier
- air flow upstream the purifier
- air pressure downstream the purifier
- air pressure upstream the purifier.

6. A combination of an air grid and an air separation plant comprising
- a cryogenic section (11) producing at least one product containing at least one air component,
- a cooling step (7) for cooling compressed air (6),
- a purifier (9) comprising at least two switchable adsorber vessels for purifying cooled air (8),
- means to send the purified air (10) to the cryogenic section (11)
- two sources of compressed air are provided,
- the first source being connected to the air grid (1) supplying compressed air to further consumers,
- the second source being a dedicated main air compressor (4) delivering compressed air to the cooling step (7) only,
- means for mixing air portions (2, 5) from both sources at a mixing point (3) and
- control means for controlling the air flow (10) to the cryogenic section (11) by measuring (12, 12.1, 12.2) at least one parameter of the air flow upstream or downstream the purifier and, according to such measurement, setting (14) the air flow (5) at the outlet of the main air compressor (4).

7. The combination of claim 6, in which the control means are capable of setting (14) of the air flow at the outlet of the main air compressor by controlling the guide vanes of the main air compressor.

8. The combination of claim 6, in which the control means are capable of setting the air flow (2) from the air grid (1) to the mixing point (3) by a flow control valve (15, 15') being not controlled by the measuring (12, 12.1, 12.2) of at least one parameter of the air flow upstream or downstream the purifier.

9. The combination of any of claims 6 to 8, in which the control means are capable of controlling the air flow by the air flow measurement downstream the purifier as the single parameter measured.

10. The combination of any of claims 6 to 8, in which the control means comprises one or more measurement devices used for controlling the air flow, such measurement devices being capable of measuring one or more of the following parameters:
- air flow downstream the purifier
- air flow upstream the purifier
- air pressure downstream the purifier
- air pressure upstream the purifier.

11. Method for upgrading an air separation site already comprising at least two air separation units supplied with pressurized air by an air grid (1) by adding a further air separation plant according to claim 6, the further air separation plant being operated according to one of claims 1 to 5.

12. Method for upgrading an air separation site already comprising at least two air separation units supplied with pressurized air by an air grid (1) by adding a further air separation plant according to claim 6, the further air separation being an air separation plant according to one of claims 6 to 10.

## Patentansprüche

1. Luftzerlegungsverfahren, wobei Druckluft (6) sukzessive in einer Kühlstufe (7) gekühlt, in einem Reiniger (9) gereinigt und an einen kryogenen Abschnitt (11) gesendet wird, der mindestens ein Produkt erzeugt, das mindestens eine Luftkomponente enthält, wobei der Reiniger (9) mindestens zwei umschaltbare Adsorberbehälter umfasst, von denen sich einer im Adsorptionsmodus befindet, wobei zwei Druckluftquellen bereitgestellt sind, wobei die erste Quelle ein Luftnetz (1) ist, das Druckluft an weitere Verbraucher liefert, und die zweite Quelle ein eigener Hauptluftkompressor (4) ist, der Druckluft nur an die Kühlstufe (7) liefert, wobei Luftanteile (2, 5) aus beiden Quellen an einem Mischpunkt (3) gemischt werden und der Luftstrom (10) zum kryogenen Abschnitt (11) gesteuert wird, indem mindestens ein Parameter des dem Reiniger vor- oder nachgelagerten Luftstroms gemessen (12, 12.1, 12.2) wird und der Luftstrom (5) am Auslass des Hauptluftkompressors (4) entsprechend dieser Messung eingestellt (14) wird.

2. Verfahren nach Anspruch 1, wobei das Einstellen (14) des Luftstroms am Auslass des Hauptluftkompressors durch Steuern der Leitschaufeln des Hauptluftkompressors erfolgt.

3. Verfahren nach Anspruch 1, wobei der Luftstrom (2) vom Luftnetz (1) zum Mischpunkt (3) durch ein Durchflusssteuerventil (15, 15') eingestellt wird, das nicht durch Messen (12, 12.1, 12.2) von mindestens einem Parameter des dem Reiniger vor- oder nachgelagerten Luftstroms gesteuert wird.

4. Verfahren nach einem der vorstehenden Ansprüche, wobei der dem Reiniger nachgelagerte Luftstrom der einzige Parameter ist, der gemessen und zum Steuern des Luftstroms verwendet wird.

5. Verfahren nach einem der Ansprüche 1 bis 3, wobei einer oder mehrere der folgenden Parameter gemessen und zum Steuern des Luftstroms verwendet werden:
- dem Reiniger nachgelagerter Luftstrom
- dem Reiniger vorgelagerter Luftstrom
- dem Reiniger nachgelagerter Luftdruck
- dem Reiniger vorgelagerter Luftdruck.

6. Kombination aus einem Luftnetz und einer Luftzerlegungsanlage, umfassend:
- einen kryogenen Abschnitt (11), der mindestens ein Produkt erzeugt, das mindestens eine Luftkomponente enthält,
- eine Kühlstufe (7) zum Kühlen von Druckluft (6),
- einen Reiniger (9), umfassend mindestens zwei umschaltbare Adsorberbehälter zum Reinigen von gekühlter Luft (8),
- Einrichtungen zum Senden der gereinigten Luft (10) zum kryogenen Abschnitt (11)
- es sind zwei Druckluftquellen bereitgestellt,
- von denen die erste Quelle mit dem Luftnetz (1) verbunden ist, um weitere Verbraucher mit Druckluft zu versorgen,
- die zweite Quelle ein eigener Hauptluftkompressor (4) ist, der Druckluft nur an die Kühlstufe (7) liefert,
- Einrichtungen zum Mischen von Luftanteilen (2, 5) aus beiden Quellen an einem Mischpunkt (3) und
- Steuereinrichtungen zum Steuern des Luftstroms (10) zum kryogenen Abschnitt (11) durch Messen (12, 12.1, 12.2) von mindestens einem Parameter des dem Reiniger vor- oder nachgelagerten Luftstroms und Einstellen (14) des Luftstroms (5) am Auslass des Hauptluftkompressors (4) entsprechend dieser Messung.

7. Kombination von Anspruch 6, wobei die Steuereinrichtungen in der Lage sind, den Luftstrom am Auslass des Hauptluftkompressors durch Steuern der Leitschaufeln des Hauptluftkompressors einzustellen (14).

8. Kombination nach Anspruch 6, wobei die Steuereinrichtungen in der Lage sind, den Luftstrom (2) vom Luftnetz (1) zum Mischpunkt (3) durch ein Durchflusssteuerventil (15, 15') einzustellen, das nicht durch Messen (12, 12.1, 12.2) von mindestens einem Parameter des dem Reiniger vor- oder nachgelagerten Luftstroms gesteuert wird.

9. Kombination nach einem der Ansprüche 6 bis 8, wobei die Steuereinrichtungen in der Lage sind, den Luftstrom durch die dem Reiniger nachgelagerte Luftstrommessung als einzigen gemessenen Parameter zu steuern.

10. Kombination nach einem der Ansprüche 6 bis 8, wobei die Steuereinrichtungen eine oder mehrere Messvorrichtungen zum Steuern des Luftstroms umfassen, wobei diese Messvorrichtungen in der Lage sind, einen oder mehrere der folgenden Parameter zu messen:
- den dem Reiniger nachgelagerten Luftstrom
- den dem Reiniger vorgelagerten Luftstrom
- den dem Reiniger nachgelagerten Luftdruck
- den dem Reiniger vorgelagerten Luftdruck.

11. Verfahren zum Aufrüsten eines Luftzerlegungsbetriebs, der bereits mindestens zwei über ein Luftnetz (1) mit Druckluft versorgte Luftzerlegungseinheiten umfasst, durch Hinzufügen einer weiteren Luftzerlegungsanlage nach Anspruch 6, wobei die weitere Luftzerlegungsanlage nach einem der Ansprüche 1 bis 5 betrieben wird.

12. Verfahren zum Aufrüsten eines Luftzerlegungsbetriebs, der bereits mindestens zwei über ein Luftnetz (1) mit Druckluft versorgte Luftzerlegungseinheiten umfasst, durch Hinzufügen einer weiteren Luftzerlegungsanlage nach Anspruch 6, wobei die weitere Luftzerlegung eine Luftzerlegungsanlage ist, die nach einem der Ansprüche 6 bis 10 betrieben wird.

## Revendications

1. Procédé de séparation de l'air, dans lequel l'air comprimé (6) est successivement refroidi dans une étape de refroidissement (7), purifié dans un purificateur (9) et envoyé dans une section cryogénique (11) produisant au moins un produit contenant au moins un composant de l'air, le purificateur (9) comprenant au moins deux réservoirs adsorbants commutables, l'un d'entre eux étant en mode adsorption, deux sources d'air comprimé étant fournies, la première source étant un réseau d'air (1) fournissant de l'air comprimé à d'autres consommateurs, la seconde source étant un compresseur d'air principal dédié (4) fournissant de l'air comprimé à l'étape de refroidissement (7) uniquement, les portions d'air (2, 5) provenant des deux sources étant mélangées à un point de mélange (3) et le flux d'air (10) vers la section cryogénique (11) étant commandé par la mesure (12, 12.1, 12.2) d'au moins un paramètre du flux d'air en amont ou en aval du purificateur et, en fonction de cette mesure, en réglant (14) le flux d'air (5) à la sortie du compresseur d'air principal (4).

2. Procédé selon la revendication 1, dans lequel le réglage (14) du débit d'air à la sortie du compresseur d'air principal est effectué en commandant les aubes directrices du compresseur d'air principal.

3. Procédé selon la revendication 1, dans lequel le débit d'air (2) de la grille d'air (1) au point de mélange (3) est réglé par une vanne de régulation de débit (15, 15'), qui n'est pas commandée par la mesure (12, 12.1, 12.2) d'au moins un paramètre du débit d'air en amont ou en aval de l'épurateur.

4. Procédé selon l'une quelconque des revendications précédentes, dans lequel le débit d'air en aval du purificateur est le seul paramètre mesuré et utilisé pour commander le débit d'air.

5. Procédé selon l'une quelconques des revendications 1 à 3, dans lequel un ou plusieurs des paramètres suivants sont mesurés et utilisés pour commander le flux d'air :
- un flux d'air en aval du purificateur
- un flux d'air en amont du purificateur
- la pression de l'air en aval du purificateur
- la pression d'air en amont du purificateur.

6. Combinaison d'une grille d'air et d'une installation de séparation d'air comprenant
- une section cryogénique (11) produisant au moins un produit contenant au moins un composant aérien,
- une étape de refroidissement (7) pour refroidir l'air comprimé (6),
- un purificateur (9) comprenant au moins deux réservoirs adsorbants commutables pour purifier l'air refroidi (8),
- des moyens pour envoyer l'air purifié (10) vers la section cryogénique (11)
- deux sources d'air comprimé sont prévues,
- la première source est raccordé au réseau d'air (1) qui fournit de l'air comprimé à d'autres consommateurs,
- la seconde source est un compresseur d'air principal dédié (4) qui fournit de l'air comprimé à l'étape de refroidissement (7) uniquement,
- des moyens pour mélanger les portions d'air (2, 5) provenant des deux sources à un point de mélange (3) et
- des moyens de commande pour commander le flux d'air (10) vers la section cryogénique (11) en mesurant (12, 12.1, 12.2) au moins un paramètre du flux d'air en amont ou en aval du purificateur et, en fonction de cette mesure, en réglant (14) le flux d'air (5) à la sortie du compresseur d'air principal (4).

7. Combinaison selon la revendication 6, dans laquelle les moyens de commande sont capables de régler (14) le débit d'air à la sortie du compresseur d'air principal en contrôlant les aubes directrices du compresseur d'air principal.

8. Combinaison selon la revendication 6, dans laquelle les moyens de commande sont capables de régler le flux d'air (2) de la grille d'air (1) au point de mélange (3) par une vanne de commande de flux (15, 15') n'étant pas commandée par la mesure (12, 12.1, 12.2) d'au moins un paramètre du flux d'air en amont ou en aval de l'épurateur.

9. Combinaison selon l'une quelconque des revendications 6 à 8, dans laquelle les moyens de commande sont capables de commander le débit d'air par la mesure du débit d'air en aval du purificateur en tant que paramètre unique mesuré.

10. Combinaison selon l'une quelconque des revendications 6 à 8, dans laquelle les moyens de commande comprennent un ou plusieurs dispositifs de mesure utilisés pour contrôler le flux d'air, ces dispositifs de mesure étant capables de mesurer un ou plusieurs des paramètres suivants :
- le flux d'air en aval du purificateur
- le flux d'air en amont du purificateur
- la pression de l'air en aval du purificateur
- la pression d'air en amont du purificateur.

11. Procédé d'amélioration d'un site de séparation d'air comprenant déjà au moins deux unités de séparation d'air alimentées en air sous pression par une grille d'air (1) par l'ajout d'une installation de séparation d'air supplémentaire selon la revendication 6, l'installation de séparation d'air supplémentaire étant exploitée selon l'une quelconque des revendications 1 à 5.

12. Procédé d'amélioration d'un site de séparation d'air comprenant déjà au moins deux unités de séparation d'air alimentées en air sous pression par une grille d'air (1) par l'ajout d'une installation de séparation d'air supplémentaire selon la revendication 6, l'installation de séparation d'air supplémentaire étant une installation de séparation d'air selon l'une des revendications 6 à 10.
